# EUROPEAN PATENT SPECIFICATION

(11) **EP 2 440 392 B1**
(45) Date of publication and mention of the grant of the patent: **25.10.2017**
(21) Application number: 09845906.8
(22) Date of filing: 11.06.2009
(51) Int. Cl.: B29C 70/14, B29C 65/00, B64C 1/06, B29C 65/02, B29L 31/30, B29K 105/24, B29K 105/16, B29K 105/06, B29C 70/46, B29C 35/02, B29K 307/00

(54) **METHOD OF PRODUCING AN AIRCRAFT STRUCTURE COMPRISING A NANO-REINFORCED RADIUS FILLER**
VERFAHREN ZUR HERSTELLUNG EINER FLUGZEUGSTRUKTUR MIT EINEM NANOVERSTÄRKTEN RADIUSFÜLLER
PROCÉDÉ DE PRODUCTION D'UNE STRUCTURE D'AVION COMPRENANT UN AGENT DE REMPLISSAGE DE RAYON NANORENFORCÉ

(43) Date of publication of application: 18.04.2012
(73) Proprietor: Saab AB, 581 88 Linköping (SE)
(72) Inventor: HALLANDER, Per, SE-582 16 Linköping (SE); PETERSSON, Mikael, SE-589 51 Linköping (SE); WEIDMANN, Björn, SE-590 31 Borensberg (SE); GRANKÄLL, Tommy, SE-582 53 Linköping (SE); STRINDBERG, Göte, SE-589 41 Linköping (SE); NORDIN, Pontus, SE-587 25 Linköping (SE)
(74) Representative: Zacco Sweden AB
(86) International application number: PCT/SE2009/050716
(87) International publication number: WO 2010/144007

(56) References cited:
- EP-A2- 0 287 103
- US-A- 4 331 495
- US-A- 5 650 229
- US-A1- 2008 286 564
- US-A1- 2009 110 836
- GOJNY F H ET AL: "Influence of nano-modification on the mechanical and electrical properties of conventional fibre-reinforced composites", COMPOSITES PART A: APPLIED SCIENCE AND MANUFACTURING, ELSEVIER SCIENCE PUBLISHERS B.V., AMSTERDAM, NL, vol. 36, no. 11, 1 November 2005 (2005-11-01), pages 1525-1535, XP027846662, ISSN: 1359-835X [retrieved on 2005-11-01]

## Description

### TECHNICAL FIELD

The present invention relates to a method of producing an aircraft structure according to claim 1.

### BACKGROUND ART

When producing an integrated monolithic structure (also called an aircraft structure such as a wing, rudder, flap etc.) for an aircraft (such.), structural composite parts (such as semi-cured and pre-formed plastic beams, resin shells etc.) are cured together with a composite radius filler filling a gap between the structural composite parts being connected. The gap is formed by at least two rounded sections of rounded or curved areas of the respective structural composite part facing each other.

The composite radius fillers are thus arranged between the rounded sections of the structural composite parts (such as composite laminates) for filling the gap between structural composite parts' rounded areas. The radius filler is thus applied in the aircraft structure for preventing deformation and/or weakening of the area near the gap or cavity otherwise present between the structural composite parts of the aircraft structure. The radius filler is often used to fill the gap between outer rounded edges of adjacent structural composite parts being bonded to each other.

The structural composite parts will thus, bonded together, constitute a rigid and strong aircraft structure for use in an aircraft, wherein the structural composite parts must be of a satisfactory strength. It is of great importance to create a strong integrated monolithic structure (aircraft structure) for an aircraft, since the overall thickness of the structural composite parts can be made relatively thin and the material being used can thus be saved for achieving a lower total weight of the air craft. This means for example that less fuel has to be consumed in transport of passenger and cargo, thus being more environmental friendly and promote a cost effective transport. The aircraft structure is in this application defined as a specific structure of an aircraft, such as a wing, a fuselage, a rudder, a flap, an aileron, a fin, a tailplane etc. The aircraft structure consists of at least two assembled, and bond together, three-dimensional structural composite parts.

The structural composite parts are formed (e.g. hot drape forming or mechanical forming) earlier into three-dimensional structural composite parts and are thereafter assembled together to form the aircraft structure. The three-dimensional structural composite parts are bonded to each other by means of a bonding interlayer material, i.e. an adhesive. This adhesive is today used for holding together the aircraft structure, i.e. the assembly of the structural composite parts. The adhesive can be a melt-bondable adhesive resin, such as an epoxy. At the same date as the filing date of the present application, the applicant of this application also has filed an application reciting a bonding interlayer material comprising a nanostructure provided for connecting at least two structural composite parts (e.g. a wing beam and wing shell) together for building an aircraft structure (e.g. a wing) of an aircraft. Earlier such beam and shell connections were made by pure resin, screws, rivets etc.

Each structural composite part can be comprised of fibre reinforced plies being laid onto each other before for the forming of a stack. The stack is then formed into said structural composite part and semi-cured for effective handling.

Composite radius fillers of today, which being comprised of traditional resin filler material without any fibres, serve for filling up the gap between the structural composite parts assembled together to form the aircraft structure. Such a composite radius filler weakens the finished aircraft structure, especially within the interface area between the composite radius filler and the surface of the structural composite parts. The composite radius filler according to prior art thus may tear apart and crack within said interface area due to tear and shear strain. Also, the radius filler may separate from the structural composite part due to heavy loads or stress. Document US 2009//0110836, which is considered to be the closest prior art, shows such a known radius filler. The structural composite part of the aircraft structure is defined in this application as a specific three-dimensional structural composite part being used together with at least another specific three-dimensional structural composite part for building the aircraft structure. The three-dimensional structural composite part can be a beam, a shell, a wing rib, a bulkhead, a nose cone shell, a frame, a web stiffener etc.

The structural composite part can be made of a stack of pre-preg plies (fiber layers impregnated with resin before being placed on a temporary support by means of for example an Automatic Tape Laying-machine). The stack has plies with different fiber directions. The stack is thereafter moved to a forming tool for forming the stack into a three-dimensional shape, or at least a two-dimensional shape. When forming the stack of plies over the forming tool, a force generated from a forming medium (e.g. vacuum bag or rollers) will generate shearing forces onto the stack of plies, wherein the plies will slide against each other. This is achieved for avoiding wrinkles in the finished formed three-dimensional structural composite part. The benefit with the gliding effect or sliding between the plies is several, especially the lack of wrinkles. The finished formed structural composite part is thereafter moved to an assembly and curing tool for assembly and curing together with at least another finished formed three-dimensional structural composite part with the radius fillers arranged in specific gaps or cavities between adjacent structural composite parts.

Several solutions exist today strengthening the radius fillers being arranged between structural composite parts in an aircraft.

US 4 331 495 describes structural composite parts being joined, wherein the gaps created by the rounded surfaces are filled with radius fillers, by sewing the structural composite parts together within the area of said rounded areas and the radius filler for preventing "peel" forces tending to separate the structural composite parts at their interface.

US 5 650 229 describes a preformed radius filler which is adapted to fill a gap between composite laminates of a structural composite part. The radius filler comprises unidirectional fibers and a stabilizer as injected resin.

US 5 827 383 describes a radius filler comprising resin and fibers, wherein the radius filler is further strengthened by means of pins.

US 2003/0183067 describes a fiber reinforced radius filler having a binding agent/tackifier solution.

Known radius fillers suffer from that the peripheral area of the radius filler, which area is adjacent the interface between the radius filler and the structural composite part rounded surface, has a tendency to crack when the structural composite part is under heavy load and/or stress.

It is thus desirable to improve the strength of an integrated monolithic structure, such as an aircraft structure, being comprised of at least three assembled structural composite parts and at least one composite radius filler filling a gap between said at least three assembled structural composite parts.

It is also desirable to achieve an aircraft structure of low weight. Also is it desirable to make more effective the handling of the radius filler in the production of aircraft structures and to provide an effective method of producing a reinforced aircraft structure.

### SUMMARY OF THE INVENTION

This has been achieved by the method being characterized by the features of the characterizing part of claim 1.

In such way the aircraft composite integrated structure as a whole can have an optimal strength since the composite radius filler by means of the present invention will be considered as a structural part of the aircraft composite integrated structure. The reinforced composite radius filler will thereby provide the aircraft composite structure a strength in x-, y-, z-direction. The composite radius filler will have a reduced thermal linear expansion and the viscosity can be controlled by the amount of nanostructure for an optimal handling of the composite radius filler under production. The aircraft composite integrated structure (aircraft structure) as a whole will thus have an optimal impact strength.

Preferably, the nanostructure primarily is arranged in the periphery of the composite radius filler for reinforcement of an interface area between the composite radius filler and the structural composite parts.

In this way the aircraft structure can be reinforced by means of a small addition of material, meaning that the overall weight of the aircraft can be reduced. The nanostructure located within the peripheral area of the radius filler hinders that cracks will appear in the radius filler near the interface between the radius filler and the structural composite part during heavy stressing of the aircraft.
Suitably, the nanostructure comprises nanofibers and/or nanotubes and/or nanowires.
Preferably, the nanostructure is oriented perpendicular against the structural composite part.

In such way the strength of the structural composite part is further increased within the area of said interface.
Suitably, the nanostructure has an unidirectional orientation.

Thereby, the strength is increased in a specific direction, e.g. corresponding with the prolongation of the radius filler.
Preferably, the composite radius filler has a triangular cross section.

In such way the radius filler can be used in a gap often appearing between three structural composite parts being joined together.
Suitably, the composite radius filler is comprised in an aileron.

In such way an aircraft structure is provided having a relatively small weight, still having a satisfactory strength.

Preferably, the step of providing the composite radius filler is characterized by arranging a nanostructure primarily in the periphery of the composite radius filler for reinforcement of the interface between the composite radius filler and the structural composite parts. The viscosity of the resin of the radius filler is controlled by the amount of nanostructure for an optimal handling of the composite radius filler under production. In this way a cost-effective production is achieved at the same time being flexible regarding the actual application.

### BRIEF DESCRIPTION OF THE DRAWINGS

The present invention will now be described by way of example with reference to the accompanying schematic drawings, of which:
FIG. 1 illustrates a cross section of a radius filler according to prior art being subjected to stress;
FIG. 2 illustrates a curing tool for the assembly of structural composite parts formed to an aircraft structure comprising radius fillers according to a first embodiment;
FIG. 3 illustrates an assembly of structural composite parts wherein the radius filler is positioned in a gap formed between said structural composite parts;
FIG. 4 illustrates a cross section of a radius filler according to the first embodiment;
FIG. 5 illustrates a perspective view of a radius filler according to a second embodiment; and
FIG. 6 illustrates a cross section of a radius filler according to a third embodiment.

### DETAILED DESCRIPTION

Hereinafter, embodiments of the present invention will be described in detail with reference to the accompanying drawings, wherein for the sake of clarity and understanding of the invention some details of no importance are deleted from the drawings.

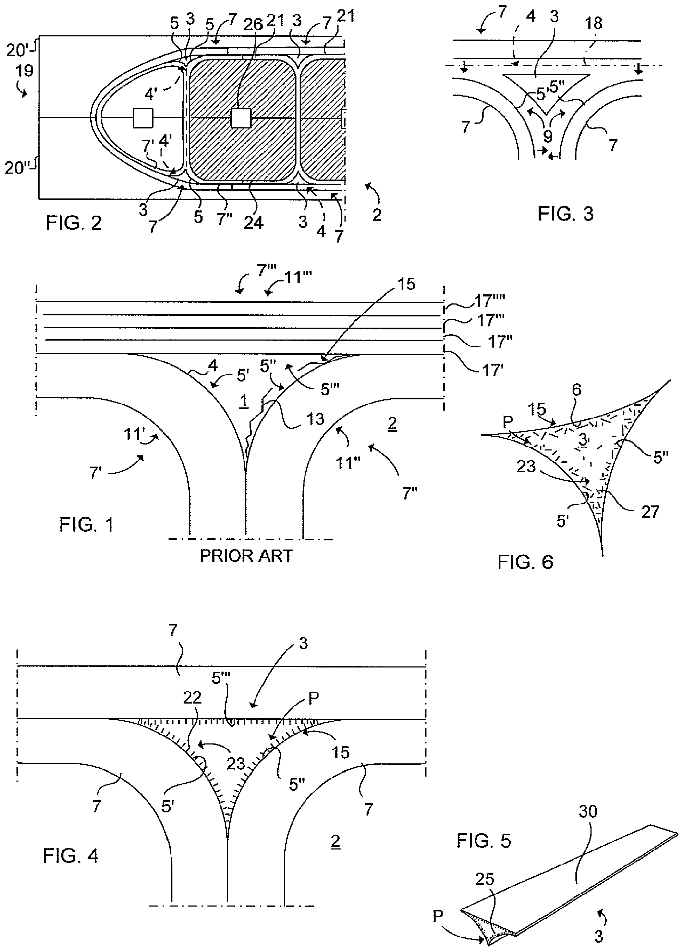

FIG. 1 schematically illustrates a cross section of a radius filler 1 of an aircraft structure 2 according to prior art which has been subjected to stress. A triangular gap 4 is filled according to the prior art with the traditional radius filler 1 being comprised of dry fibres in the form of carbon fibres (not shown) for reinforcing the connection of three surfaces 5', 5", 5''' of respective structural composite part 7', 7", 7'''. A first rounded corner outer surface 5' of a first semi-cured composite beam 11' being connected to a second rounded corner outer surface 5" of a second semi-cured beam 11" and to an essentially flat inside surface 5''' of a semi-cured shell 11'''. The aircraft structure 2 is after assembly cured and forms an integrated structure. During its use in an aircraft, intensive stress has (illustrated in FIG. 1) caused cracks 13 in an interface area 15 of the radius filler 1, i.e. in the peripheral area of the radius filler 1 near the interface area 15 between the radius filler 1 and the structural composite part 7". There is thus a need for reinforcing the interface area 15 as it revealing has been shown in experiments that cracks can occur in this specific interface area 15. The applicant of this application has tried to solve this problem by that the laminate plies 17', 17", 17''', 17'''' of the composite shell 11''' being adhered to each other by means of a fibre reinforced epoxy. This does however not hinder the appearance of the cracks, it may even promote the causing of cracks.

FIG. 2 schematically illustrates a curing tool 19 for the assembly of structural composite parts 7 formed to an aircraft structure 2, here an aileron, comprising radius fillers 3 according to a first embodiment of the present invention. The radius filler 3 is in detail explained in connection with the FIG. 4 below. The semi-cured structural composite parts 7 are assembled, wherein the radius fillers 3 according to the first embodiment are placed in gaps 4 formed between the rounded surfaces 5 of the structural composite parts 7', 7", and positioned in the curing tool 19. Two gaps 4' of the triangular gaps have each three rounded surfaces (gaps 4, 4' are illustrated in the FIGS. 2 and 3 with broken reference arrow lines and are marked for the sake of clarity as they are filled with the radius fillers 3, wherein the definition of a gap can thus be a hollow space filled with a radius filler).

The curing tool 19 thus being loaded with structural composite parts 7, each being earlier formed over by a so called ATL-machine (not shown). The curing tool 19 being loaded with the structural composite parts 7 for building the aircraft structure 2. The structural composite parts 7 being assembled are: a nose cap of reinforced resin being bonded to an upper and lower shell inner surface, a structural nose beam of composite being arranged and bonded to the web of an adjacent first structural U-beam 21, the flanges of which being bonded to the inner surface of the shell 11''' and bonded to the flange edges of a second structural U-beam, a third structural U-beam having its web bonded to the web of the second structural U-beam, etc. The upper 11''' and lower shells are bonded in the rear part (not shown) of the aileron. A radius filler 3 can also thus be regarded as a structural composite part, one of which is in more detail shown in Fig. 3.

The structural composite parts 7 and the radius fillers 3 plus a bonding interlayer material 18 (see FIG. 3) adapted for connecting the structural composite parts 7 and the radius fillers 3 together -the bonding interlayer material 18 preferably comprises a curable resin and reinforcing nanostructure (such as nanofibres)-, are positioned in the curing tool 19.

The curing tool 19 consisting of an upper 20' and lower 20'' forming tool part including heating elements (not shown) for increasing the temperature of the structural composite parts 7, the radius fillers 3 and the bonding interlayer material 18 for a proper curing of the bonding interlayer material comprising the nanotubes and a proper curing and bonding of the semi-cured structural composite parts 7 to the radius fillers 3. Interior holding-on tools 24 are placed within the nose beam and the U-beams 21 for achieving a pressure from inside. Each interior holding-on tool can be divided into parts by releasing a wedge 26 arranged for keeping the parts together.

Thereafter, the aircraft structure 2 is cured and removed from the curing tool 19. In FIG. 3 is shown schematically the assembly of the structural composite parts 7 regarding one of the radius 3 fillers in FIG. 2, wherein the radius filler 3 is positioned in the radius gap 4 formed by upper rounded corners of two U-beams 21, the webs of which is closely adhered to each other, and by the underside of the composite shell 11'''. The radius filler 3 is made of a resin filled with reinforcing nanofibres. The U-beams 21 are firstly assembled, the radius filler 3 is thereafter positioned in a v-formed groove (later on constituting walls of the gap 4) formed by said upper rounded corners. Finally, the shell 11''' is positioned over the U-beams' 21 flanges and the radius filler 3. When all parts are in place, the structural composite parts 7 are cured for forming the aircraft structure 2.

Thus is a method of producing an aircraft composite integrated structure achieved, wherein the aircraft structure 2 comprises structural composite parts 7 assembled together to form said aircraft structure 2, wherein the composite radius filler 3 is arranged between rounded sections of at least two of the structural composite parts 7 for filling the gap 4 between the structural composite parts 7. The composite radius filler 3 is made structural by a nanostructure 23 arranged within the composite radius filler 3. The method having the steps of providing said nanostructure reinforced composite radius filler 3 by mixing a curable resin and a nanostructure 23, forming separately at least three structural composite parts 7 from pre-fabricated preimpregnated fibre plies, laid-up to each other and having different fibre orientations, assembling the separately formed structural composite parts 7 with said nanostructure reinforced composite radius filler 3 between rounded sections 9 of the structural composite parts 7 for filling the gap 4 between the structural composite parts 7, curing the assembled structural composite parts 7 and the nanostructure reinforced composite radius filler 3 together in a curing tool 19, and removing the finished cured aircraft composite integrated structure (aircraft structure 2) from the curing tool 19.

In FIG. 4 the radius filler 3 is schematically illustrated in a cross section according to the first embodiment. The composite radius filler is thus made structural by the nanostructure 23 arranged within the composite radius filler 3. According to this embodiment the nanostructure primarily is arranged in the periphery P of the composite radius filler for reinforcement of the interface area 15 between the composite radius filler 3 and the structural composite parts 7. The nanostructure 23 is in the form of nanofibers 22 and is oriented perpendicular against the respective structural composite part 7. In this way the aircraft structure 2 can be reinforced effective by means of a cost-effective feature in addition which is of low weight, meaning that the overall weight of the aircraft can be reduced. The nanostructure 23 located in the periphery P of the radius filler 3 hinders that any cracks will appear in the radius filler 3 near the interface area 15 between the radius filler 3 and the structural composite part 7 due to overloading the aircraft.

In this way the aircraft as a whole can have an optimal strength since the composite radius filler 3 will be considered as a structural part of the aircraft. The nano-reinforced composite radius filler 3 will thereby provide the aircraft's structural composite parts a strength in x-, y-, z-direction.

The composite radius filler 3 will have a reduced thermal linear expansion and the viscosity can be controlled by the amount of nanostructure 23 for an optimal handling of the composite radius filler 3 under production. The aircraft composite integrated structure as a whole will have an optimal impact strength.

FIG. 5 illustrates a perspective view of a prolonged radius filler 3 according to a second embodiment. The nanostructure 23 comprises nanotubes 25 having a unidirectional orientation along the prolongation of the radius filler 3. The nanotubes 25 are located in the periphery P of the composite radius filler 3 for reinforcement of the interface area 15 between the composite radius filler 3 and the structural composite parts 7. The prolongation of the nanotubes is thus parallel with the prolongation of the radius filler, i.e. perpendicular to a plane corresponding with the shown triangular cross section of the radius filler 3.

In FIG. 5 is shown a radius filler 3 being arranged with a protective tape 30 for protecting the radius filler and to simplify the handling of the radius filler 3 in the production line. Also the viscosity can be controlled by the amount of nanostructure for an optimal handling of the composite radius filler under production. The radius filler 3 comprises a resin, which is of such a viscosity in a semi-cured state, that the radius filler is easy to handle.

FIG. 6 schematically illustrates a cross section of a radius filler 3 according to a third embodiment. The nanostructure comprises nanowires 27 being oriented unhomogeneous with a major part positioned in the periphery P of the composite radius filler 3 for reinforcement of the interface area 15 between the composite radius filler 3 and the structural composite parts 7. The nanowires 27 located within the periphery P of the radius filler 3 hinders that any cracks appear in the radius filler 3 near the interface area 15, which is a transition zone between the radius filler 3 and the structural composite part 7, during heavy stressing of the aircraft. The radius filler 3 in FIG. 6 has a triangular cross-section with three convex outer surfaces 5', 5", 6. The present invention is of course not in any way restricted to the preferred embodiments described above, but many possibilities to modifications, or combinations of the described embodiments, thereof should be apparent to a person with ordinary skill in the art without departing from the invention as defined in the appended claims. The nanostructure can be embodied in epoxy ,polymides, bismaleimides, phenolics, polycyanurate, Cyanatester, PEEK, PPS, Polyester, Vinylester and other curable resins or mixtures thereof. The nanostructure may be of ceramic, carbon and metal or mixtures thereof.

## Claims

1. A method of producing an aircraft structure comprising structural composite parts (7) assembled together to form said aircraft structure (2), wherein a composite radius filler (3) is arranged between rounded sections (5', 5") of the structural composite parts (7) for filling a gap (4) formed between the structural composite parts (7), and the composite radius filler (3) is made structural by a nanostructure (23) arranged within the composite radius filler (3), the method is **characterized by** the steps of:
- providing said nanostructure reinforced composite radius filler (3) and controlling the viscosity of the resin of the radius filler (3) by the amount of said nanostructure (23;
- forming separately at least three structural composite parts (7);
- assembling the separately formed structural composite parts (7) with said nanostructure reinforced composite radius filler (3) between the rounded sections (5', 5") of the structural composite parts (7) for filling the gap (4) between the structural composite parts (7);
- curing the assembled structural composite parts (7) and the nanostructure reinforced composite radius filler (3) in a curing tool (19); and
- removing the finished cured aircraft structure (2) from the curing tool (19).

2. The method according to claim 1, **wherein** the composite radius filler (3) is made structural by arranging a nanostructure (23) primarily in the periphery (P) of the composite radius filler (3) for reinforcement of the interface area (15) between the composite radius filler (3) and the structural composite parts (7).

3. The method according to claim 1 or 2, **wherein** the nanostructure (23) primarily is arranged in the periphery (P) of the composite radius filler (3) for reinforcement of an interface area (15) between the composite radius filler (3) and the structural composite parts (7).

4. The method according to any of claim 1 to 3, **wherein** the nanostructure comprises nanofibers (22).

5. The method according to any of claim 1 to 3, **wherein** the nanostructure comprises nanotubes (25).

6. The method according to any of claim 1 to 3, **wherein** the nanostructure comprises nanowires (27).

7. The method according to any of the preceding claims, **wherein** the nanostructure (23) is oriented perpendicular against the structural composite part (7).

8. The method according to any of claims 1 to 6, **wherein** the nanostructure (23) has an unidirectional orientation.

9. The method according to any of the preceding claims, **wherein** the composite radius filler (3) has a triangular cross section.

## Patentansprüche

1. Verfahren zum Herstellen einer Flugzeugstruktur, die Strukturverbundteile (7) umfasst, die miteinander montiert werden, um die Flugzeugstruktur (2) zu bilden, wobei ein Verbundradiusfüller (3) zwischen gerundeten Abschnitten (5', 5") der Strukturverbundteile (7) angeordnet wird, um einen Zwischenraum (4) zwischen den Strukturverbundteilen (7) zu füllen, und wobei der Verbundradiusfüller (3) strukturell gemacht wird durch eine Nanostruktur (23), die in dem Verbundradiusfüller (3) angeordnet wird, wobei das Verfahren **gekennzeichnet ist durch** die folgenden Schritte:
- Vorsehen des Nanostruktur-verstärkten Verbundradiusfüllers (3) und Steuern der Viskosität des Kunstharzes des Radiusfüllers (3) durch die Menge der Nanostruktur (23),
- separates Ausbilden von wenigstens drei Strukturverbundteilen (7),
- Montieren der separat ausgebildeten Strukturverbundteile (7) mit dem Nanostruktur-verstärkten Verbundradiusfüller (3) zwischen den gerundeten Abschnitten (5', 5") der Strukturverbundteile (7), um den Zwischenraum (4) zwischen den Strukturverbundteilen (7) zu füllen,
- Aushärten der montierten Strukturverbundteile (7) und des Nanostruktur-verstärkten Verbundradiusfüllers (3) in einer Aushärtungseinrichtung (19), und
- Entnehmen der fertiggestellten ausgehärteten Flugzeugstruktur (2) aus der Aushärtungseinrichtung (19).

2. Verfahren nach Anspruch 1, **wobei** der Verbundradiusfüller (3) strukturell gemacht wird durch das Anordnen einer Nanostruktur (23) vor allem in der Peripherie (P) des Verbundradiusfüllers (3) für eine Verstärkung des Grenzbereichs (15) zwischen dem Verbundradiusfüller (3) und den Strukturverbundteilen (7).

3. Verfahren nach Anspruch 1 oder 2, **wobei** die Nanostruktur (23) vor allem in der Peripherie (P) des Verbundradiusfüllers (3) für eine Verstärkung des Grenzbereichs (15) zwischen dem Verbundradiusfüller (3) und den Strukturverbundteilen (7) angeordnet wird.

4. Verfahren nach einem der Ansprüche 1 bis 3, wobei die Nanostruktur Nanofasern (22) enthält.

5. Verfahren nach einem der Ansprüche 1 bis 3, **wobei** die Nanostruktur Nanoröhren (25) enthält.

6. Verfahren nach einem der Ansprüche 1 bis 3, **wobei** die Nanostruktur Nanodrähte (27) enthält.

7. Verfahren nach einem der vorstehenden Ansprüche, **wobei** die Nanostruktur (23) senkrecht zu dem Strukturverbundteil (7) ausgerichtet ist.

8. Verfahren nach einem der Ansprüche 1 bis 6, **wobei** die Nanostruktur (23) eine unidirektionale Ausrichtung aufweist.

9. Verfahren nach einem der vorstehenden Ansprüche, **wobei** der Verbundradiusfüller (3) einen dreieckigen Querschnitt aufweist.

## Revendications

1. Procédé de production d'une structure d'aéronef qui comprend des parties composites structurelles (7) qui sont assemblées ensemble de manière à former ladite structure d'aéronef (2), dans lequel un agent de remplissage de rayon composite (3) est agencé entre des sections arrondies (5, 5") des parties composites structurelles (7) pour remplir un espace (4) qui est formé entre les parties composites structurelles (7), et l'agent de remplissage de rayon composite (3) est rendu structurel au moyen d'une nanostructure (23) qui est agencée à l'intérieur de l'agent de remplissage de rayon composite (3), le procédé étant **caractérisé par** les étapes consistant à :
- fournir ledit agent de remplissage de rayon composite renforcé par nanostructure (3) et contrôler la viscosité de la résine de l'agent de remplissage de rayon (3) au moyen de la quantité de ladite nanostructure (23) ;
- former séparément au moins trois parties composites structurelles (7) ;
- assembler les parties composites structurelles formées séparément (7) avec ledit agent de remplissage de rayon composite renforcé par nanostructure (3) entre les sections arrondies (5, 5") des parties composites structurelles (7) pour remplir l'espace (4) entre les parties composites structurelles (7) ;
- durcir les parties composites structurelles assemblées (7) et l'agent de remplissage de rayon composite renforcé par nanostructure (3) dans un outil de durcissement (19) ; et
- retirer la structure d'aéronef durcie terminée (2) de l'appareil de durcissement (19).

2. Procédé selon la revendication 1, dans lequel l'agent de remplissage de rayon composite (3) est rendu structurel en agençant une nanostructure (23) principalement au niveau de la périphérie (P) de l'agent de remplissage de rayon composite (3) pour le renforcement de la zone d'interface (15) entre l'agent de remplissage de rayon composite (3) et les parties composites structurelles (7).

3. Procédé selon la revendication 1 ou 2, dans lequel la nanostructure (23) est agencée principalement en périphérie (P) de l'agent de remplissage de rayon composite (3) pour le renforcement d'une zone d'interface (15) entre l'agent de remplissage de rayon composite (3) et les parties composites structurelles (7).

4. Procédé selon l'une quelconque des revendications 1 à 3, dans lequel la nanostructure comprend des nano-fibres (22).

5. Procédé selon l'une quelconque des revendications 1 à 3, dans lequel la nanostructure comprend des nanotubes (25).

6. Procédé selon l'une quelconque des revendications 1 à 3, dans lequel la nanostructure comprend des nano-fils (27).

7. Procédé selon l'une quelconque des revendications précédentes, dans lequel la nanostructure (23) est orientée perpendiculairement contre les parties composites structurelles (7).

8. Procédé selon l'une quelconque des revendications 1 à 6, dans lequel la nanostructure (23) présente une orientation unidirectionnelle.

9. Procédé selon l'une quelconque des revendications précédentes, dans lequel l'agent de remplissage de rayon composite (3) présente une section transversale triangulaire.
